# EUROPEAN PATENT APPLICATION

(11) **EP 1 738 957 A2**
(43) Date of publication of application: **03.01.2007**
(21) Application number: 06076276.2
(22) Date of filing: 20.06.2006
(51) Int. Cl.: B60Q 1/08, B60Q 1/12, B62J 6/02

(54) **Illumination device with selective activation/deactivation of illuminating segments**

(30) Priority: 28.06.2005 IT MI20051219
(71) Applicant: Ecie S.r.l., Lainate MI (IT)
(72) Inventor: Delfi, Luigi c/o Ecie S.r.l., Lainate (MI) (IT)
(74) Representative: Raimondi, Margherita

(57) **Abstract**

Illuminating device comprising a container body (1;101) provided with a front reflector (10) divided into segments (11), each of which is associated with a respective light source (12), there being envisaged means (20) for detecting the distance (d1,d2) of reference points (R1,R2), associated with the device, from a fixed surface, and a control unit (100) able to receive signals from said detection means (20) and activate/deactivate selectively the light source (12) of specific segments (11) of the reflector (10) independently of the other segments, so as to keep the demarcation line (D) of the headlamp parallel to the said fixed surface.

## Description

The present invention relates to an illuminating device, in particular for two-wheeled vehicles, equipped with illuminating segments which can be selectively activated/deactivated.

It is known in the technical sector relating to two-wheeled vehicles that there exists the need to provide the same with high-beam and dipped-beam headlamps able to illuminate correctly the road during travel.

Headlamps of various types are also known, all being characterized in that the light source emits the light always in the same direction, even when the vehicle is travelling along a curved trajectory where the typical inclination of the motorbike directs the said light towards zones far away from those actually travelled along, resulting in the rider having to ride in dangerous conditions owing to the badly light road surface.

The technical problem which is posed, therefore, is to provide an illuminating device, in particular a headlamp for two-wheeled vehicles, which allows the surface travelled along to be illuminated correctly, keeping the demarcation line parallel to the ground even when the vehicle is inclined during travel along curved trajectories.

In connection with this problem it is also required that this device should have small dimensions, be easy and inexpensive to produce and assemble and be able to be easily installed also on ready existing vehicles using normal standard connecting means.

These results are achieved according to the present invention by an illuminating device comprising a container body provided with a front reflector divided into segments, each of which is associated with a respective light source, there being envisaged means for detecting the distance of reference points, associated with the device, from a fixed surface, and a control unit able to receive signals from said detection means and activate/deactivate selectively the light source of the specific segments of the reflector independently of other segments, so as to keep the demarcation line of the headlamp parallel to the said fixed surface.

Further details may be obtained from the following description of a non-limiting example of embodiment of the present invention provided with reference to the accompanying drawings in which:
- Figures 1a, 1b show a front view of the motorbike inclined and a view, from above, of the area lit by a conventional headlamp;
- Figure 2 shows a schematic front view of a motorbike with an illuminating device according to the present invention,
- Figure 3 shows a schematic cross-section along a vertical plane of the headlamp according to Fig. 2;
- Figure 4 shows a block diagram of the device according to the invention;
- Figures 5a,5b show, respectively, a front view of the motorbike inclined and a view, from above, of the area lit by a device according to the present invention;
- Figure 6 show a schematic front view of a motorbike with an illuminating device according to the present invention arranged outside a headlamp of the conventional type.

As shown, the illuminating device according to the present invention comprises a headlamp 1, the front end surface of which is formed by a reflector 10 divided into segments 11, each of which is associated with a light source 12, for example of the LED type, independent of the other light sources and able to be activated/deactivated selectively upon operation of ON/OFF switching means 130 situated inside a control unit 100 associated with the device.

Outside the headlamp 1 there are provided respective sensors 20 positioned in a mutually symmetrical manner relative to the longitudinal axis of the vehicle and able to detect the distance d1 and d2 of respective reference points R1 and R2 from the surface of the roadway along which the vehicle is travelling and to emit a corresponding signal sent to receiving means 110 and processing means 120 of the control unit 100.

With this configuration, the operating principle of the device is as follows:
- upon switching-on the headlamp the sensors 20 and the control unit 100 are automatically switched on;
- the sensors start to detect the respective distances d1 and d2 of the points R1,R2 from the ground;
- they send a corresponding signal to the control unit 100;
- the two distances d1, d2 appear inside the processing means 120, determining, on the basis of their difference, the angle α° of inclination of the vehicle and the direction of inclination;
- this activates correspondingly, by means of the control means 130, headlamp segments included within the correct quadrant with respect to the inclination determined and switches off instead those segments, the light beam of which would illuminate unnecessarily zones outside the path travelled along.

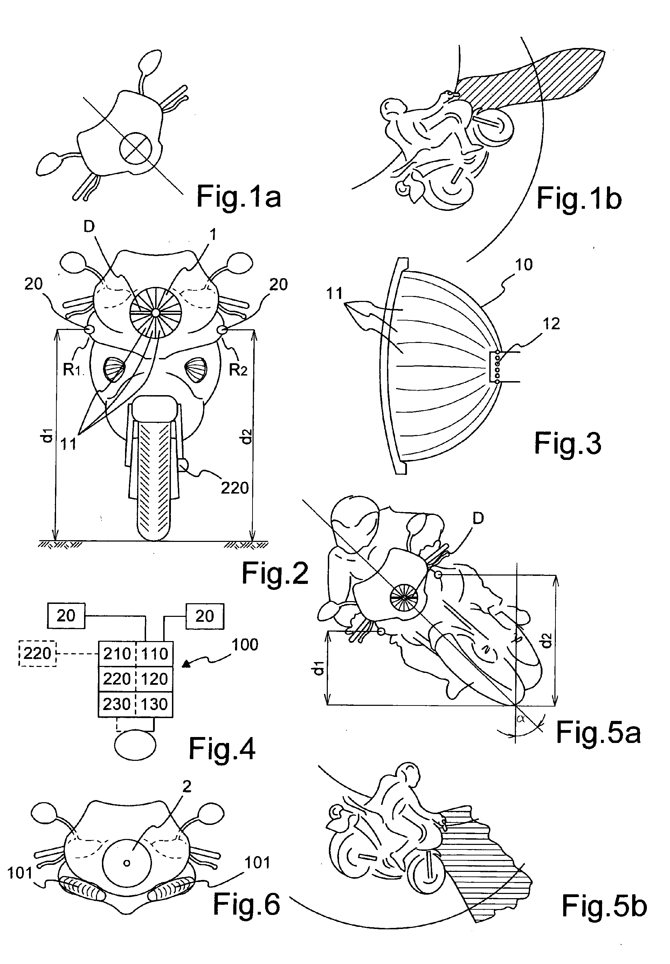

A comparison of Figs. 1a, 1b relating to the prior art and Figs. 5a,5b relating to the device according to the present invention illustrates the difference, in operation, between a headlamp of the conventional type (Fig. 1b) which, around a bend, lights up zones which are outside the travel path and an illuminating device according to the present invention (Fig. 5b) which, around a bend, keeps the demarcation line D parallel to the road surface, illuminating correctly the path travelled along and leaving unlit, instead, the surrounding zones.

Fig. 6 shows a second embodiment of the device according to the present invention which envisages in this case two separate bodies 101 arranged outside a headlamp 2 of the conventional type; operation of the device is entirely similar to that already described, but with the configuration according to Fig. 6, it is possible to fit the device also on existing vehicles without replacing the conventional headlamp already installed.

It is also envisaged (Fig. 2) that the device may also be associated with means 220 for monitoring predefined auxiliary parameters such as the speed of the vehicle, the external light conditions, the possible presence of rain and/or fog; said detection means being able to send corresponding signals to receiving means 210 and processing means 220 of the control unit 100 which will emit corresponding control signals for the headlamp 1 in order to vary the light distributed by it in accordance with the actual requirement detected by the sensors 220 which, for example, will indicate the need to concentrate the light beam in the event of high speed for which a greater depth of vision is required.

It is therefore clear how, with the device according to the invention, it is possible to keep the demarcation line of the headlamp parallel to the ground and illuminate correctly the road surface along the path actually travelled along by a two-wheeled vehicle, also when travelling around bends, resulting in safer and easier riding conditions.

## Claims

1. Illuminating device comprising a container body (1;101) provided with a front reflector (10), **characterized in that** said reflector (10) is divided into segments (11), each of which is associated with a respective light source (12), there being envisaged means (20) for detecting the distance (d1, d2) of reference points (R1,R2), associated with the device, from a fixed surface, and a control unit (100) able to receive signals from said detection means (20) and activate/deactivate selectively the light source (12) of specific segments (11) of the reflector (10) independently of the other segments, so as to keep the demarcation line (D) of the headlamp parallel to the said fixed surface.

2. Device according to Claim 1, **characterized in that** said light sources (12) are of the LED type.

3. Device according to Clam 1, **characterized in that** said sensors (20) and reference points (R1,R2) are positioned on opposite sides and symmetrically with respect to the said device.

4. Device according to Claim 1, **characterized in that** said control unit (110) comprises means (100) for receiving the signals sent by the sensors (20), means (120) for processing said signals and means (130) for activating/deactivating the light sources (12) of the device.

5. Device according to Claim 4, **characterized in that** said processing means (120) are able to determine the difference in measurement of said distances (dl,d2) of the reference points (R1,R2) from the fixed surface.

6. Device according to Claim 1, **characterized in that** said device is a headlamp for a two-wheeled vehicle.

7. Device according to Claim 6, **characterized in that** said fixed surface is the road surface.

8. Device according to Claim 6, **characterized in that** said processing means (120) of the control unit (100) are able to calculate the angle (α°) of inclination of the vehicle with respect to the road surface.

9. Device according to Claim 6, **characterized in that** the segments (11) of the reflector (10) activated/deactivated are angularly arranged in the quadrant part corresponding to a distance (d1/d2) of the device from the road surface which is respectively smaller/greater.

10. Device according to Claim 1, **characterized in that** it comprises at least one body (101) arranged outside a light source (2) of the conventional type.

11. Device according to Claim 1, **characterized in that** it comprises means (220) for detecting predefined auxiliary control parameters.

12. Device according to Claim 11, **characterized in that** said detection means (220) are able to send to the control unit (100) corresponding signals representing said parameters.

13. Device according to Claim 12, **characterized in that** said control unit (100) comprises means (210) for receiving signals sent by the auxiliary sensors (220), means (220) for processing said signals received, and means (230) for varying the light distribution of the beam emitted by the headlamp.
